(19) **Europäisches Patentamt / European Patent Office / Office européen des brevets**

(11) **EP 2 616 744 B1**

(12) **FASCICULE DE BREVET EUROPEEN**

(45) Date de publication et mention
de la délivrance du brevet:
**23.03.2016 Bulletin 2016/12**

(21) Numéro de dépôt: **11755338.8**

(22) Date de dépôt: **12.09.2011**

(51) Int Cl.:
*F24D 19/10* (2006.01)   *G05D 23/19* (2006.01)

(86) Numéro de dépôt international:
**PCT/EP2011/065724**

(87) Numéro de publication internationale:
**WO 2012/034965 (22.03.2012 Gazette 2012/12)**

(54) **SYSTEME THERMIQUE A FAIBLE PUISSANCE POUR L'HABITAT**

NIEDRIGENERGIE HEIZVORRICHTUNG FÜR EIN GEBÄUDE

LOW POWER HEATING DEVICE FOR A BUILDING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.09.2010 FR 1057292**

(43) Date de publication de la demande:
**24.07.2013 Bulletin 2013/30**

(73) Titulaire: **Commissariat à l'Énergie Atomique
et aux Énergies Alternatives
75015 Paris (FR)**

(72) Inventeurs:
• **PAULUS, Cédric
F-73490 La Ravoire (FR)**
• **LEFRANCOIS, Florent
F-01300 Belley (FR)**

(74) Mandataire: **Novaimo
Bâtiment Europa 2
310 avenue Marie Curie
Archamps Technopole
74166 Saint-Julien-en-Genevois Cedex (FR)**

(56) Documents cités:
**EP-A1- 1 600 697     FR-A1- 2 569 257
GB-A- 2 218 540     US-A- 5 088 645**

**Description**

L'invention concerne un procédé de gestion thermique d'un bâtiment ainsi qu'un système thermique mettant en oeuvre un tel procédé. Elle porte aussi sur un support comprenant un logiciel mettant en oeuvre un tel procédé. Enfin, elle concerne aussi un bâtiment équipé d'un tel système thermique.

Lors de phases d'inoccupation des bâtiments, leur température est souvent réduite pour économiser l'énergie. Pour cela, le chauffage est par exemple stoppé une certaine période, jusqu'à atteindre une température intérieure correspondant à une température de consigne basse. Puis, lors du retour des occupants, la température de confort maximale est de nouveau recherchée. Une phase dite de relance est mise en route, qui consiste à chauffer de nouveau le bâtiment pour repasser de la température intérieure basse à la température intérieure haute.

Une première solution de l'état de la technique repose sur un générateur d'énergie fonctionnant selon un mode de régulation de la température entre deux consignes de température haute et basse, la température de consigne haute étant utilisée aux horaires pour lesquels les occupants sont présents alors que la température de consigne basse est utilisée lorsqu'ils sont absents. Cette solution permet une économie d'énergie par rapport à une solution dans laquelle la température de confort maximal serait toujours recherchée mais reste très simpliste et non optimisée. De plus, la température de consigne basse est souvent renseignée de manière aléatoire par les occupants eux-mêmes, ou prédéfinie en usine sans tenir compte du climat réel. Ainsi, lorsque les occupants rentrent, il se peut que le temps de chauffage soit très long pour atteindre la température de confort, si la température a été trop réduite. Dans un tel cas, la phase de relance paraît interminable. Inversement, il se peut que la température de consigne basse ait été choisie trop élevée et ait entraîné une consommation énergétique inutile en l'absence de ses occupants. De plus, un occupant aura tendance à renseigner des températures de consigne ne correspondant pas à ses vrais horaires pour tenter d'anticiper une éventuelle défaillance, ou s'il a entendu des prévisions météorologiques de basse température. Ainsi, il apparaît bien que l'optimisation d'un tel système est très difficile. En pratique, il en résulte une insatisfaction des occupants qui n'ont pas toujours leur température de confort dans des délais acceptables et une consommation énergétique élevée et non optimisée. FR 2 569 257 divulgue un procédé de gestion thermique par auto adaptation des temps réels.

Une seconde solution de l'état de la technique repose sur des systèmes de chauffage se présentant comme des appareils multifonctions qui intègrent en fait deux générateurs complémentaires : un générateur de base de faible puissance, par exemple entre 1,5 à 6 kW, utilisé pour les besoins énergétiques en régimes permanents et particulièrement adapté aux bâtiments très isolés, dits à basse consommation énergétique, qui sont en plein développement, et un générateur d'appoint de forte puissance, pouvant aller jusqu'à quatre fois la puissance de base, par exemple entre 6 et 9 kW, utilisé pour les courts régimes transitoires. Cette seconde solution fonctionne toujours selon une régulation de la température à partir d'une température de confort et une température basse pour les phases d'inoccupation. Grâce au générateur de forte puissance, utilisé exclusivement pour les phases de relance, la température de confort est atteinte en général dans un temps satisfaisant. Cette solution présente le premier inconvénient d'exiger un coût d'investissement élevé pour équiper un bâtiment. Elle présente de plus un second inconvénient d'entraîner des périodes de pics de consommation énergétique élevés, ce qui complique la gestion énergétique globale d'un territoire, tout en exigeant des abonnements de chaque individu à un réseau électrique adaptés à leurs besoins ponctuels de forte puissance, ce qui présente généralement un coût important pour de courtes périodes d'utilisation. Enfin, elle présente toujours le même inconvénient de mise au point que la première solution de l'état de la technique, notamment pour le choix de la valeur de la température de consigne d'absence.

Ainsi, un objet général de l'invention est de proposer une solution améliorée de gestion thermique d'un bâtiment, qui résout tout ou partie des inconvénients précédents.

A cet effet, l'invention repose sur un procédé de gestion thermique d'un bâtiment, à partir d'un système thermique équipé d'un générateur à faible puissance, caractérisé en ce qu'il comprend une étape (E3) de mise en route du générateur de manière anticipée en l'absence d'occupant dans le bâtiment afin de respecter une consigne de confort future à un instant futur (H), en tenant compte de l'énergie disponible ($E_{générateur\_H}$) au générateur jusqu'à cet instant futur (H) et de l'énergie nécessaire ($E_{chauffage\_H}$) pour atteindre la consigne de confort future au sein du bâtiment à cet instant futur (H).

La consigne de confort future peut être une consigne de température et le procédé peut comprendre les étapes suivantes :

(E1) - Calcul de l'énergie disponible ($E_{générateur\_H}$) au générateur jusqu'à l'instant futur (H) ;
(E2) - Calcul de l'énergie nécessaire ($E_{chauffage\_H}$) pour atteindre la température de consigne au sein du bâtiment à cet instant (H) ;
(E3') - Comparaison des deux valeurs précédentes et mise en route du générateur si $E_{générateur\_H} < E_{chauffage\_H}$.

La consigne de confort future peut être une durée maximale (tmax) autorisée pour atteindre une température de confort en cas de nécessité à l'instant futur (H).

Le procédé peut comprendre les étapes suivantes :

(E1) - Calcul de l'énergie disponible ($E_{générateur\_H}$) au générateur jusqu'à l'instant futur (H) ;

(E2) - Calcul de l'énergie nécessaire ($E_{chauffage\_H}$) pour atteindre la température de consigne au sein du bâtiment à cet instant (H) ;

(E3") - Comparaison des deux valeurs précédentes et mise en route du générateur si H > tmax.

Le procédé de gestion thermique d'un bâtiment peut comprendre une étape de calcul d'une température de consigne basse pour réguler le fonctionnement du générateur en l'absence d'occupant dans le bâtiment, cette consigne basse étant variable avec le temps.

Le procédé de gestion thermique d'un bâtiment peut comprendre une étape de saisie d'au moins une des données suivantes :

- Saisie d'au moins une consigne de température en cas d'occupation du bâtiment et/ou en cas de non-occupation ; et/ou
- Saisie des périodes d'occupation et/ou de non-occupation du bâtiment ; et/ou
- Saisie d'une durée maximale (tmax) autorisée de fonctionnement du générateur pour atteindre une certaine température de confort dans le bâtiment.

Le procédé peut comprendre une étape d'évaluation de la température extérieure future sur plusieurs instants (H) d'une période future (P).

Le procédé peut comprendre une étape d'auto-apprentissage des caractéristiques thermiques du bâtiment.

Le procédé de gestion thermique d'un bâtiment peut comprendre le calcul de l'énergie disponible ($E_{générateur\_H}$) au générateur jusqu'à l'instant futur (H) par l'équation suivante :

$$E_{générateur\_H} = \sum_{1}^{H} P_{nominal}$$

où $P_{nominal}$ est la puissance nominale du générateur, ou par l'équation suivante :

$$E_{générateur\_H} = \sum_{1}^{H} (a \times T_{e\_evap} + b \times T_{e\_evap}^2 + c \times T_{e\_cond} + d)$$

Avec :

a, b, c, d : paramètres caractéristiques d'une pompe à chaleur ;

$T_{e\_evap}$ : température d'entrée à l'évaporateur de la pompe à chaleur ;

$T_{e\_cond}$ : température d'entrée au condenseur de la pompe à chaleur.

Le procédé de gestion thermique d'un bâtiment peut comprendre le calcul de l'énergie nécessaire ($E_{chauffage-H}$) pour atteindre une température intérieure de consigne du bâtiment à l'instant (H) par l'équation suivante :

$$E_{chauffage\_H} = (CAP_{ct} + CAP_{lt}) \times (T_{int\_cons\_H} - T_{int}) + GV \times \sum_{1}^{H} [(T_{int} + (T_{int\_cons\_H} - T_{int})/2) - T_{ext\_H}]$$

Avec:

$T_{int}$ : température intérieure à l'instant présent ;

$T_{int\_cons\_H}$ : température intérieure de consigne à l'instant H ;

$T_{ext\_H}$ : température extérieure estimée à l'instant H ;

$CAP_{ct}$ : capacité calorifique court terme du bâtiment ;

$CAP_{lt}$ : capacité calorifique long terme du bâtiment ;

GV : coefficient de déperditions thermiques du bâtiment.

Le procédé de gestion thermique d'un bâtiment peut comprendre la répétition pour plusieurs instants (H) d'une période future (P) d'une étape d'estimation du besoin de mise en route du générateur de manière anticipée en l'absence d'occupant dans le bâtiment afin de respecter une consigne de confort future à un instant futur (H), en tenant compte de l'énergie disponible ($E_{générateur\_H}$) au générateur jusqu'à cet instant futur (H) et de l'énergie nécessaire ($E_{chauffage\_H}$) pour atteindre la consigne de confort future au sein du bâtiment à cet instant futur (H).

L'invention porte aussi sur un support informatique comprenant un programme informatique mettant en oeuvre les étapes du procédé de gestion thermique d'un bâtiment tel que décrit précédemment.

L'invention porte aussi sur un système de gestion thermique d'un bâtiment comprenant un générateur à faible puissance, caractérisé en ce qu'il comprend une unité de contrôle qui met en oeuvre le procédé de gestion thermique d'un bâtiment tel que décrit précédemment.

L'unité de contrôle peut comprendre un premier module d'estimation de la température extérieure sur une période future, un second module d'estimation de l'énergie disponible dans le générateur pour la période considérée, un troisième module d'apprentissage des caractéristiques thermiques du bâtiment pour modéliser son comportement thermique, un quatrième module de détermination de l'énergie nécessaire pour le bâtiment et un cinquième module de pilotage thermique du générateur.

L'invention porte aussi sur un bâtiment caractérisé en ce qu'il comprend un système de gestion thermique mettant en oeuvre le procédé de gestion thermique tel que décrit précédemment.

Ces objets, caractéristiques et avantages de la présente invention seront exposés en détail dans la description suivante d'un mode d'exécution particulier fait à titre non-limitatif en relation avec les figures jointes parmi lesquelles :

La figure 1 illustre schématiquement un système thermique pour un bâtiment selon un mode d'exécution de l'invention.

La figure 2 représente l'évolution comparative de températures intérieures d'un bâtiment avec ou sans le mode d'exécution de l'invention selon un premier scénario.

Les figures 3 et 4 représentent l'évolution comparative de températures intérieures d'un bâtiment avec ou sans le mode d'exécution de l'invention selon un second scénario.

Le mode d'exécution de l'invention définit un système thermique de gestion de l'énergie d'un bâtiment, dans le cadre du chauffage d'un bâtiment. Toutefois, le concept de l'invention reste applicable à toute gestion thermique du bâtiment, pour sa climatisation, sa ventilation, etc.

Le système thermique selon le mode d'exécution de l'invention se présente comme un système de chauffage, comprenant un générateur unique de faible puissance et une unité de contrôle, comprenant un ou plusieurs moyens matériels (hardware) et/ou logiciels (software) dont un microprocesseur par exemple, mettant en oeuvre le procédé de gestion thermique qui sera décrit ultérieurement.

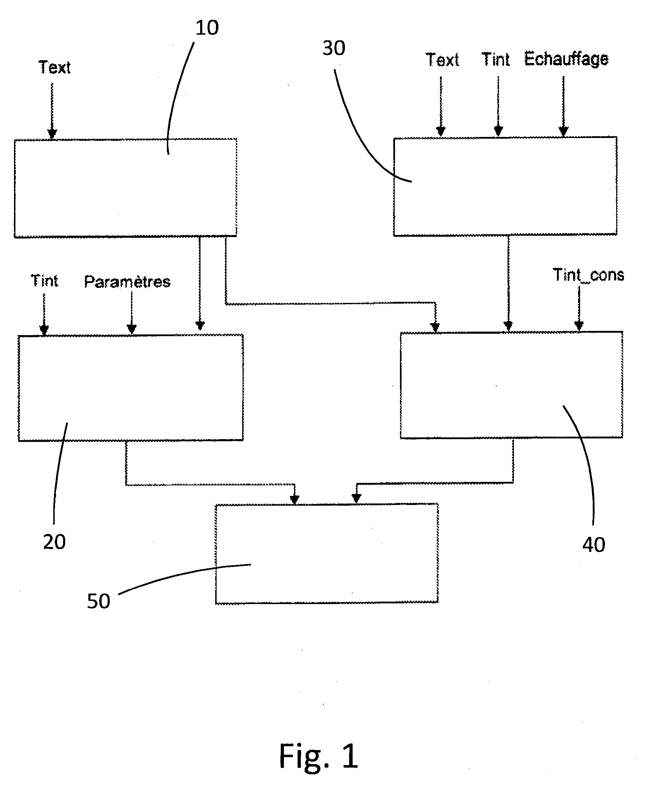

Le système thermique selon le mode d'exécution de l'invention se présente comme un appareil comprenant une pompe à chaleur et présentant les différents modules représentés schématiquement sur la figure 1. Le premier module 10 met en oeuvre une fonction d'estimation de la température extérieure sur une période P future. Le second module 20 met en oeuvre une fonction d'estimation de l'énergie disponible dans le générateur pour la période P considérée. Le troisième module 30 met en oeuvre une fonction d'apprentissage des caractéristiques thermiques du bâtiment pour modéliser son comportement thermique. Le quatrième module 40 met en oeuvre une fonction de détermination de l'énergie nécessaire pour le chauffage du bâtiment sur la période P. Enfin, le cinquième module 50 remplit la fonction de gestion thermique du bâtiment, de pilotage du chauffage. Enfin, le système thermique comprend une interface homme machine non représentée, qui permet à un habitant de saisir ses périodes d'occupation, et/ou une température de confort de consigne, et/ou une valeur de temps maximal de chauffage, qui sera explicité par la suite.

Le concept de l'invention consiste à supprimer les pics de puissance pour les phases de relance du chauffage, par exemple lorsque les occupants entrent dans un bâtiment non occupé, en anticipant leur entrée en chauffant le bâtiment à partir d'une faible puissance, au moins partiellement avant leur entrée, de manière calculée pour une optimisation énergétique. Pour cela, le système thermique étudie à l'avance la situation thermique sur une période future P au sein du bâtiment.

Ce concept va maintenant être détaillé en décrivant plus précisément les différents modules du système thermique selon le mode d'exécution de l'invention. A titre d'exemple, le système thermique va anticiper la situation selon une période horaire, c'est-à-dire heure par heure, et pour une période P correspondant aux 24 prochaines heures : en variante, le même principe pourra être implémenté pour toute autre période future que 24 heures et pour tout pas temporel autre que l'heure.

Le premier module 10 de l'invention a donc pour fonction d'estimer la température qu'il fera à l'extérieur du bâtiment pour chaque heure des prochaines 24 heures. Pour cela, toute méthode existante peut être implémentée, comme celle décrite dans le document EP2146309, l'invention ne portant pas sur ce module spécifiquement.

A titre d'exemple, la température extérieure peut être obtenue par une première estimation de la température extérieure moyenne $T_{ext\_moy\_P}$ sur les prochaines 24 heures, en fonction de la température extérieure maximale $T_{ext\_max\_P-1}$ et/ou minimale $T_{ext\_min\_P-1}$ mesurée(s) de la période de 24 heures précédente, et/ou de la température extérieure mesurée à l'instant présent. Pour cela, le système thermique est équipé d'un thermomètre extérieur lui permettant de connaître à tout instant la température extérieure mesurée $T_{ext}$.

La température extérieure moyenne sur les prochaines 24 heures peut dépendre de l'heure du calcul et être définie par les formules suivantes :

$$A\ 6\ H : T_{ext\_moy\_P} = (T_{ext\_mesurée\_6H} + T_{ext\_max\_P-1})\ /2$$

$$A\ 10\ H : T_{ext\_moy\_P} = T_{ext\_mesurée\_10H}$$

$$A\ 15\ H : T_{ext\_moy\_P} = (T_{ext\_min\_P-1} + T_{ext\_mesurée\_15H})\ /2$$

$$A\ 22\ H : T_{ext\_moy\_P} = T_{ext\_mesurée\_22H}$$

Ensuite, à partir de la température extérieure moyenne estimée de la période P, le profil horaire de la température extérieure de cette période P est estimé par la fonction sinus suivante :

$$T_{ext\_H\_P}=[(T_{ext\_min\_P}+T_{ext\_max\_P})/2]+[(T_{ext\_min\_P}-T_{ext\_max\_P})/2]*\sin[((H+n)-9)\pi/12]$$

Avec :

$T_{ext\_H\_P}$ : température extérieure estimée à l'heure H de la période P,
$T_{ext\_min\_P}$ : température extérieure minimale des 24 prochaines heures,
$T_{ext\_max\_P}$ : température extérieure maximale des 24 prochaines heures,
n : heure réelle de la journée.

Pour appliquer cette fonction, le module 10 estime donc auparavant les valeurs de température extérieure moyenne minimale $T_{ext\_min\_P}$ et maximale $T_{ext\_max\_P}$ des prochaines 24 heures.

Pour cela, les formules suivantes peuvent être utilisées :

$$A\ 6H : T_{ext\_min\_P} = T_{ext\_mesurée\_6H}\quad et\quad T_{ext\_max\_P}= 2 * T_{ext\_moy\_P} - T_{ext\_mesurée\_6H}$$

$$A\ 10H : T_{ext\_min\_P} = T_{ext\_min\_P-1}\quad et\quad T_{ext\_max\_P}= 2 * T_{ext\_moy\_P} - T_{ext\_min\_P-1}$$

$$A\ 15H : T_{ext\_min\_P} = T_{ext\_min\_P-1}\quad et\quad T_{ext\_max\_P}= T_{ext\_mesurée\_15H}$$

$$A\ 22H : T_{ext\_min\_P} = 2 * T_{ext\_moy\_P} - T_{ext\_max\_P-1}\quad et\quad T_{ext\_max\_P} = T_{ext\_max\_P-1}$$

Suite à la description précédente, il apparaît donc que le premier module 10 a besoin d'une seule donnée en entrée, la température extérieure passée et présente. Cette dernière peut être mesurée ou estimée.

En variante, le calcul précédent pourrait intégrer ou être remplacé par des données prévisionnelles, transmises par exemple par un serveur distant météorologique.

Le second module 20 met en oeuvre une fonction d'estimation de l'énergie disponible dans le générateur pour la période P considérée. Pour cela, le calcul le plus simple consiste à considérer la puissance nominale $P_{nominal}$ (en

kJ/h) du générateur pour en déduire l'énergie disponible par la formule suivante :

$$E_{générateur\_H} = \sum_{1}^{H} P_{nominal}$$

Avec:

$E_{générateur\_H}$ : énergie disponible (en kJ) au générateur jusqu'à l'heure H ;
H : l'heure parmi les 24 prochaines heures pour laquelle l'énergie disponible au générateur est estimée.

Naturellement, ce calcul est adapté au type de générateur utilisé. La formule précédente est bien adaptée à un chauffage à base de résistance électrique. Toutefois, si le générateur est une pompe à chaleur air extrait/air neuf, l'énergie disponible peut se calculer par l'équation suivante :

$$E_{générateur\_H} = \sum_{1}^{H} (a \times T_{e\_evap} + b \times T_{e\_evap}^2 + c \times T_{e\_cond} + d)$$

Avec :

a, b, c, d : paramètres caractéristiques de la pompe à chaleur ;
$T_{e\_evap}$ : température d'entrée à l'évaporateur de la pompe à chaleur ;
$T_{e\_cond}$ : température d'entrée au condenseur de la pompe à chaleur ;
H : l'heure parmi les 24 prochaines heures pour laquelle l'énergie disponible au générateur est estimée.

Dans le cas d'une pompe à chaleur air/air, tel qu'illustré sur la figure 1, il est possible de considérer les relations suivantes :

$$T_{e\_evap} = T_{int}$$

$$T_{e\_cond} = T_{ext\_H}$$

Naturellement, le second module 20 ne porte pas spécifiquement sur les équations précédentes et tout modèle de calcul de l'énergie disponible à une certaine heure H au cours d'une prochaine période P peut être mis en oeuvre. Dans ce cas, les données d'entrée du module seront adaptées à cet autre modèle de calcul.
Le troisième module 30 met en oeuvre une fonction d'apprentissage des caractéristiques thermiques du bâtiment pour modéliser son comportement thermique.
Pour cela, le mode d'exécution de l'invention considère le modèle thermique représenté par l'équation suivante :

$$E_{chauffage\_H} = (CAP_{ct} + CAP_{lt}) \times (T_{int\_cons\_H} - T_{int}) + GV \times \sum_{1}^{H} [(T_{int} + (T_{int\_cons\_H} - T_{int})/2) - T_{ext\_H}]$$

Avec :

$E_{chauffage\_H}$ : énergie de chauffage nécessaire jusqu'à l'heure H (en kJ) ;
$T_{int}$ : température intérieure à l'instant présent (en K) ;
$T_{int\_cons\_H}$ : température intérieure de consigne à l'heure H (en K) ;
$T_{ext\_H}$ : température extérieure estimée à l'heure H ;
$CAP_{ct}$ : capacité calorifique court terme du bâtiment (représentant en fait le mobilier principalement) (en kJ/K) ;
$CAP_{lt}$ : capacité calorifique long terme du bâtiment (représentant en fait les murs principalement) (en kJ/K) ;

GV : coefficient de déperditions thermiques du bâtiment (en kJ/(h.K)) ;

H : l'heure parmi les 24 prochaines heures pour laquelle l'énergie disponible au générateur est estimée.

Cette équation peut s'écrire de manière matricielle par :

$$E_{chauffage\_H} = \vartheta^T \Phi$$

où $\vartheta^T$ est la transposée de la matrice $\vartheta$.

Avec $\vartheta = [CAP_{ct} \ CAP_{lt} \ GV]$

$$\Phi = \left[ \left(T_{int\_cons\_H} - T_{int}\right) \ \left(T_{int\_cons\_H} - T_{int}\right) \ \sum_{1}^{H} \left[ \left(T_{int} + (T_{int\_cons\_H} - T_{int})/2\right) - T_{ext\_H} \right] \right]$$

Ce module 30 met en oeuvre une auto-adaptation des paramètres thermiques du bâtiment en fonction de la connaissance des phases réelles de relance. Pour cela, il compare pour chaque phase de relance l'énergie réellement dépensée par le générateur avec celle prédite par le modèle ci-dessus et ajuste les paramètres thermiques si ces deux valeurs diffèrent.

L'énergie de chauffage réelle peut soit être directement mesurée par un compteur d'énergie situé sur le circuit de chauffage par exemple, ou être estimée en fonction du temps de fonctionnement du générateur et un modèle de consommation d'énergie tel que ceux exposés dans le cadre de la description du second module 20.

L'auto-adaptation des paramètres thermiques $CAP_{ct}$, $CAP_{lt}$, et GV, peut être basée sur l'algorithme suivant :

$$\vartheta(j) = \vartheta(j-1) + K(j).e(j)$$

où j représente le jour considéré.

Les matrices e et K représentent respectivement l'erreur a priori entre le besoin de chauffage mesuré et le besoin de chauffage estimé, et le gain d'adaptation à appliquer pour tenir compte de cette erreur. Ces deux matrices se calculent de la façon suivante :

L'erreur a priori :

$$e(j) = E_{chauffage}(j) - \Phi^T(j) \vartheta(j-1)$$

Gain d'adaptation :

$$K(j) = (P(j-1) \Phi(j)) / (\lambda/\mu + \vartheta^T(j) \ P(j-1) \ \vartheta(j))$$

La matrice P est réactualisée de la manière suivante :

$$P(j) = 1/\lambda \left[ P(j-1) - P(j-1) \Phi(j) \Phi^T(j) P(j) / [(\lambda/\mu + \vartheta^T(j) \ P(j-1) \ \vartheta(j))] \right]$$

Où le coefficient $\lambda$ est un facteur d'oubli et le coefficient $\mu$ un facteur de pondération.

Naturellement, ce module pourrait permettre une auto-adaptation de tout modèle thermique de l'habitât, n'est pas limité à celui décrit ci-dessus. De plus, cette auto-adaptation pourrait être mise au point selon différentes méthodes.

Le quatrième module 40 met en oeuvre une fonction de détermination de l'énergie nécessaire pour le chauffage du bâtiment sur la période P.

Il comprend donc en entrée les paramètres suivants :

- Le modèle thermique défini par le troisième module décrit ci-dessus;
- Une estimation de la température extérieure pour la période P, fournie par le premier module ;
- Un profil de température intérieure de consigne.

Il met en oeuvre le modèle thermique du bâtiment, mis au point par le module décrit précédemment, pour obtenir l'énergie nécessaire pour atteindre la température de consigne à une heure H de la période P par la formule :

$$E_{chauffage\_H} = (CAP_{ct}+CAP_{lt}) \times (T_{int\_cons\_H} - T_{int}) + GV \times \sum_{1}^{H} [(T_{int} + (T_{int\_cons\_H} - T_{int})/2) - T_{ext\_H}]$$

Le cinquième module 50 remplit la fonction de gestion thermique du bâtiment, de pilotage du système de chauffage.

Notamment, il compare les résultats des deuxième et quatrième modules 20, 40 dans le but d'anticiper la mise en route du générateur de manière appropriée pour obtenir la température de consigne à toute heure H, tout en utilisant une puissance de chauffage réduite. Cette anticipation est particulièrement pertinente pour gérer les changements d'occupation du bâtiment, correspondant aux phases de relance explicitées précédemment.

Le système thermique décrit ci-dessus présente l'avantage d'une grande autonomie puisqu'il permet son implémentation dans tout environnement inconnu. Son auto-apprentissage et sa conception lui permettent de déterminer de manière autonome et d'acquérir tous les paramètres nécessaires à son fonctionnement optimal. Ainsi, il se présentera avantageusement comme un appareil unique, regroupant dans un même boîtier tous les modules décrits ci-dessus et le générateur en tant que tel. Eventuellement, une interface homme machine peut permettre de modifier manuellement certains paramètres si nécessaires, comme les températures de consigne.

Lors de sa première mise en route, il comprend des paramètres d'initialisation qui peuvent être des valeurs moyennes, renseignées en usine, sans besoin de grande précision.

En variante toutefois, le système thermique de l'invention pourrait ne pas comprendre les modules 10 et 30, ces fonctions pouvant être externalisées par tout autre système, communiquant avec le système thermique pour lui transmettre les paramètres importants. Ainsi, comme nous l'avons vu, la température extérieure future pourrait être transmise par une base météorologique, et les paramètres thermiques intrinsèques du bâtiment pourraient être renseignés par le fabricant du bâtiment, ou calculés par tout autre dispositif indépendant.

Ainsi, le système thermique de l'invention met en oeuvre le procédé de gestion de l'énergie thermique de l'habitat comprenant les étapes E1, E2, E3' suivantes :

E1 - Calcul de l'énergie disponible $E_{générateur\_H}$ (en kJ) au générateur jusqu'à une heure future H ;
E2 - Calcul de l'énergie nécessaire $E_{chauffage\_H}$ pour atteindre la température de consigne au sein du bâtiment à cette heure H ;
E3' - Comparaison des deux valeurs précédentes et mise en route du générateur dès que $E_{générateur\_H} < E_{chauffage\_H}$.

Ce procédé permet ainsi de garantir que le temps restant jusqu'à l'heure H est suffisant pour que le générateur atteigne la température de consigne à l'heure H souhaitée en fonctionnant à un régime normal, sans exiger une puissance particulière.

En remarque, l'invention permet donc d'anticiper la mise en route du générateur pour suivre au mieux les consignes de température recherchées tout en fonctionnant avec un fonctionnement normal, sans mode à forte puissance pour gérer les phases de relance. En remarque, cette anticipation peut s'éloigner légèrement de la règle fixée à l'étape E3' ci-dessus sans sortir du concept de l'invention.

Ainsi, l'étape E3' peut plus généralement consister en la mise en route du générateur de manière anticipée afin de respecter une consigne de température future, en tenant compte de l'énergie disponible $E_{générateur\_H}$ (en kJ) au générateur jusqu'à une heure future H et de l'énergie nécessaire $E_{chauffage\_H}$ pour atteindre la température de consigne au sein du bâtiment à cette heure H.

Le procédé précédent fonctionne bien pour gérer les relances programmées, à partir de températures de consigne définies à l'avance. Toutefois, il peut arriver certaines situations imprévues dans lesquelles un habitant rentre dans son habitation plus tôt que prévu, ou à un instant indéterminé. Dans un tel cas, il n'a aucun moyen d'accélération du chauffage de son habitation puisque ce chauffage dépend uniquement de la puissance limitée de son unique générateur.

Pour répondre à un minimum de confort pour faire face à ces situations, le système thermique fait en sorte qu'à tout instant, le temps nécessaire pour atteindre une température de consigne de confort correspondant à l'occupation du bâtiment, ne soit pas supérieur à un seuil tmax prédéfini, ce qui garantit à cet habitant d'obtenir la température de confort dans un temps prédéterminé raisonnable.

Pour cela, le procédé de gestion thermique de l'habitat comprend une étape qui consiste à vérifier qu'en cas de mise en route du générateur immédiatement, le temps nécessaire pour atteindre la température de consigne de confort ne dépasse pas le seuil tmax.

Ainsi, même si l'étape E3' vérifie que $E_{générateur\_H} > E_{chauffage\_H}$, si H > tmax alors le générateur est mis en route, selon une étape E3".

Ainsi finalement, le concept de l'invention repose sur une étape E3 de mise en route du générateur de manière anticipée afin de respecter une consigne de confort, que ce soit une température ou une durée de chauffe, en tenant compte de l'énergie disponible $E_{générateur\_H}$ (en kJ) au générateur jusqu'à une heure future H et de l'énergie nécessaire $E_{chauffage\_H}$ pour atteindre la consigne au sein du bâtiment à cette heure H.

En remarque, avec une telle approche, l'occupant n'a plus besoin d'indiquer au système thermique une consigne de température basse : seul le temps maximal tmax défini ci-dessus suffit pour gérer la thermique de l'habitât dans ses périodes d'inoccupation. Cela est nettement plus convivial, économique et satisfaisant. Toutefois, il peut de plus fonctionner aussi avec une température de consigne basse, par exemple une température de hors-gel en dessous de laquelle le système ne doit pas descendre.

Le procédé de gestion thermique de l'habitat comprend une étape préalable de saisie de tout ou partie des données suivantes, par un occupant ou un constructeur :

- Saisie d'au moins une température de confort en cas d'occupation du bâtiment ;
- Saisie des périodes d'occupation et/ou d'absence du bâtiment ;
- Saisie d'une durée maximale tmax autorisée de chauffage du bâtiment.

Les étapes du procédé décrit précédemment seront de préférence mises en oeuvre pour toute heure H future de la période P future considérée. Elles seront particulièrement pertinentes pour les heures H pour lesquelles le bâtiment passe d'un état inoccupé à occupé, c'est-à-dire la gestion des phases de relance.

De plus, l'invention a été illustrée pour répondre au chauffage d'un bâtiment mais il apparaît naturellement qu'elle pourrait être implémentée facilement pour gérer sa climatisation.

Ainsi, la solution retenue répond bien aux objets de l'invention et présente les avantages suivants :

- Elle limite les pics de puissance en évitant le recours à un générateur complémentaire à forte puissance ;
- Elle satisfait le confort thermique des habitants tout en économisant des coûts ;
- Elle permet d'utiliser des générateurs à faible puissance, qui sont suffisants pour les bâtiments bien isolés.

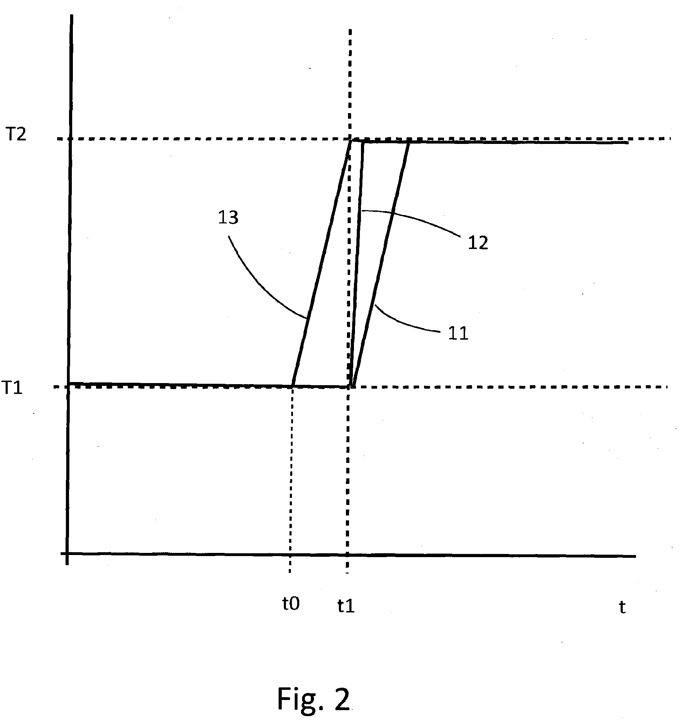

Les figures 2 à 4 illustrent à titre d'exemple le fonctionnement de la solution décrite en comparaison avec les deux solutions de l'état de la technique présentées en préambule.

La première solution de l'état de la technique repose sur un générateur de 2 kW fonctionnant entre deux températures de consigne T1 et T2, par exemple 16 et 19 °C. A l'instant t1, qui doit correspondre à l'heure d'occupation du bâtiment, la consigne de température passe de T1 à T2. Le générateur se met en route à cet instant t1 et atteint la température de consigne T2 selon la pente 11.

La seconde solution de l'état de la technique repose sur un générateur de base de 2 kW et un générateur complémentaire de 6kW. A l'instant t1, il atteint la valeur de consigne selon la pente 12, beaucoup plus rapidement puisque le générateur à forte puissance est utilisé pour cette phase de relance.

Le système thermique selon l'invention détermine en fait l'instant t0 précédent l'instant t1, pour lequel il faut mettre en route le générateur, pour atteindre la température de consigne T2 à l'instant t1, selon une pente 13 parallèle à celle de la première solution. Grâce à cette solution, le confort de l'utilisateur est satisfait, sans avoir recours à des fortes puissances de chauffage.

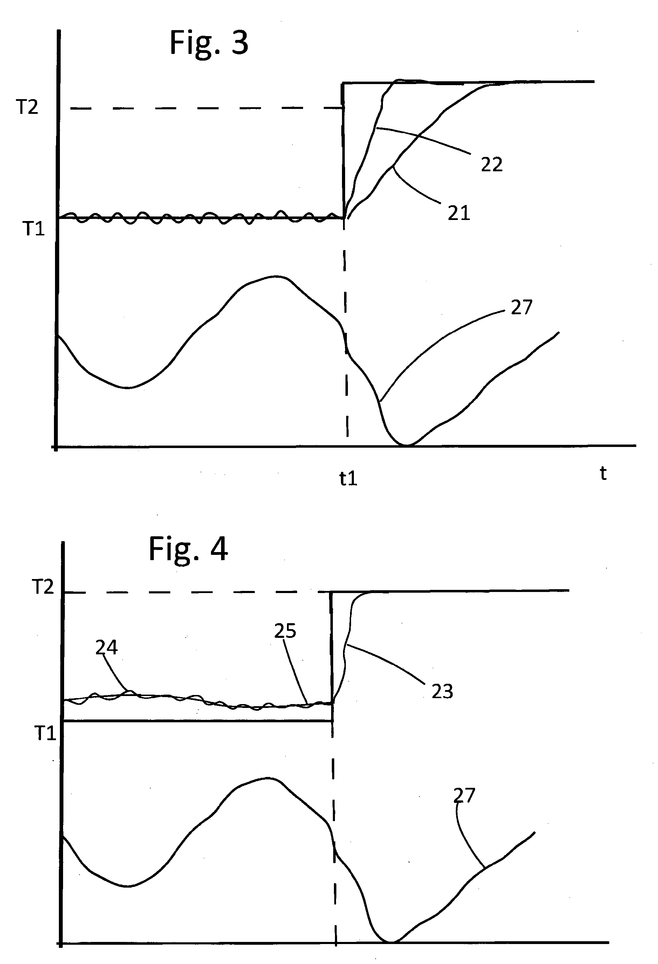

La figure 3 représente le comportement des deux solutions de l'état de la technique dans un scénario de longue absence. Un tel scénario se distingue du précédent en ce qu'on peut laisser descendre la température intérieure plus basse pour faire plus d'économies. Toutefois, cela complique la phase de relance.

Pendant l'absence, la régulation est faite autour de la température de consigne basse T1 à 12°C. A l'instant t1, l'occupant rentre chez lui et remonte la consigne de température à la valeur T2 de 19°C. La première solution atteint la consigne haute selon la pente 21, en environ 12H, plus lente que la pente 22 de la seconde solution, qui atteint la consigne en 4H, malgré sa forte puissance qui n'est plus satisfaisante dans un tel scénario. En remarque, la courbe 27 illustre la variation de température extérieure pendant cette période.

La figure 4 illustre le même scénario avec le système thermique de l'invention. Pendant la période d'absence, la température intérieure 24 n'est pas régulée autour de la consigne basse T1 mais autour d'une consigne représentée par la courbe 25, calculée automatiquement par le système, qui varie ainsi avec le temps, puisqu'elle dépend notamment de la température extérieure, et se trouve environ 2 °C au-dessus de T1. Ainsi, à l'instant t1, il ne faut qu'un temps réduit pour que la pente 23 atteigne la consigne, en environ 6H. Dans cette solution, le système thermique a donc déterminé automatiquement le chauffage nécessaire pendant l'absence pour atteindre ces 6H de chauffage au retour, sans connaître l'instant de ce retour, ce qui permet de répondre au souhait de confort de l'occupant, pour un coût minimum.

**Revendications**

1.  Procédé de gestion thermique d'un bâtiment, à partir d'un système thermique équipé d'un générateur à faible puissance, **caractérisé en ce qu'**il comprend une étape (E3) de mise en route du générateur de manière anticipée en l'absence d'occupant dans le bâtiment afin de respecter une consigne de confort future à un instant futur (H), en tenant compte de l'énergie disponible ($E_{générateur\_H}$) au générateur jusqu'à cet instant futur (H) et de l'énergie nécessaire ($E_{chauffage\_H}$) pour atteindre la consigne de confort future au sein du bâtiment à cet instant futur (H).

2.  Procédé de gestion thermique d'un bâtiment selon la revendication précédente, **caractérisé en ce que** la consigne de confort future est une consigne de température et **en ce qu'**il comprend les étapes suivantes :

    (E1) - Calcul de l'énergie disponible ($E_{générateur\_H}$) au générateur jusqu'à l'instant futur (H) ;
    (E2) - Calcul de l'énergie nécessaire ($E_{chauffage\_H}$) pour atteindre la température de consigne au sein du bâtiment à cet instant (H) ;
    (E3') - Comparaison des deux valeurs précédentes et mise en route du générateur si $E_{générateur\_H} < E_{chauffage\_H}$.

3.  Procédé de gestion thermique d'un bâtiment selon l'une des revendications précédentes, **caractérisé en ce que** la consigne de confort future est une durée maximale (tmax) autorisée pour atteindre une température de confort en cas de nécessité à l'instant futur (H).

4.  Procédé de gestion thermique d'un bâtiment selon la revendication précédente, **caractérisé en ce qu'**il comprend les étapes suivantes :

    (E1) - Calcul de l'énergie disponible ($E_{générateur\_H}$) au générateur jusqu'à l'instant futur (H) ;
    (E2) - Calcul de l'énergie nécessaire ($E_{chauffage\_H}$) pour atteindre la température de consigne au sein du bâtiment à cet instant (H) ;
    (E3") - Comparaison des deux valeurs précédentes et mise en route du générateur si H > tmax.

5.  Procédé de gestion thermique d'un bâtiment selon la revendication précédente, **caractérisé en ce qu'**il comprend une étape de calcul d'une température de consigne basse pour réguler le fonctionnement du générateur en l'absence d'occupant dans le bâtiment, cette consigne basse étant variable avec le temps.

6.  Procédé de gestion thermique d'un bâtiment selon l'une des revendications précédentes, **caractérisé en ce qu'**il comprend une étape de saisie d'au moins une des données suivantes :

    - Saisie d'au moins une consigne de température en cas d'occupation du bâtiment et/ou en cas de non-occupation ; et/ou
    - Saisie des périodes d'occupation et/ou de non-occupation du bâtiment ; et/ou
    - Saisie d'une durée maximale (tmax) autorisée de fonctionnement du générateur pour atteindre une certaine température de confort dans le bâtiment.

7.  Procédé de gestion thermique d'un bâtiment selon l'une des revendications précédentes, **caractérisé en ce qu'**il comprend une étape d'évaluation de la température extérieure future sur plusieurs instants (H) d'une période future (P).

8.  Procédé de gestion thermique d'un bâtiment selon l'une des revendications précédentes, **caractérisé en ce qu'**il comprend une étape d'auto-apprentissage des caractéristiques thermiques du bâtiment.

9.  Procédé de gestion thermique d'un bâtiment selon l'une des revendications précédentes, **caractérisé en ce qu'**il comprend le calcul de l'énergie disponible ($E_{générateur\_H}$) au générateur jusqu'à l'instant futur (H) par l'équation suivante :

$$E_{générateur\_H} = \sum_{1}^{H} P_{nominal}$$

où $P_{nominal}$ est la puissance nominale du générateur, ou par l'équation suivante :

$$E_{\text{générateur\_H}} = \sum_{1}^{H} (a \times T_{e\_evap} + b \times T_{e\_evap}^2 + c \times T_{e\_cond} + d)$$

Avec :

a, b, c, d : paramètres caractéristiques d'une pompe à chaleur ;
$T_{e\_evap}$ : température d'entrée à l'évaporateur de la pompe à chaleur ;
$T_{e\_cond}$ : température d'entrée au condenseur de la pompe à chaleur.

**10.** Procédé de gestion thermique d'un bâtiment selon l'une des revendications précédentes, **caractérisé en ce qu'**il comprend le calcul de l'énergie nécessaire ($E_{\text{chauffage\_H}}$) pour atteindre une température intérieure de consigne du bâtiment à l'instant (H) par l'équation suivante :

$$E_{\text{chauffage\_H}} = (CAP_{ct} + CAP_{lt}) \times (T_{int\_cons\_H} - T_{int}) + GV \times \sum_{1}^{H} [(T_{int} + (T_{int\_cons\_H} - T_{int})/2) - T_{ext\_H}]$$

Avec :

$T_{int}$ : température intérieure à l'instant présent ;
$T_{Int\_cons\_H}$ : température intérieure de consigne à l'instant H ;
$T_{ext\_H}$ : température extérieure estimée à l'instant H ;
$CAP_{ct}$ : capacité calorifique court terme du bâtiment ;
$CAP_{lt}$ : capacité calorifique long terme du bâtiment ;
GV : coefficient de déperditions thermiques du bâtiment.

**11.** Procédé de gestion thermique d'un bâtiment selon l'une des revendications précédentes, **caractérisé en ce qu'**il comprend la répétition pour plusieurs instants (H) d'une période future (P) d'une étape d'estimation du besoin de mise en route du générateur de manière anticipée en l'absence d'occupant dans le bâtiment afin de respecter une consigne de confort future à un instant futur (H), en tenant compte de l'énergie disponible ($E_{\text{générateur\_H}}$) au générateur jusqu'à cet instant futur (H) et de l'énergie nécessaire ($E_{\text{chauffage\_H}}$) pour atteindre la consigne de confort future au sein du bâtiment à cet instant futur (H).

**12.** Support informatique comprenant un programme informatique mettant en oeuvre les étapes du procédé de gestion thermique d'un bâtiment selon l'une des revendications précédentes.

**13.** Système de gestion thermique d'un bâtiment comprenant un générateur à faible puissance, **caractérisé en ce qu'**il comprend une unité de contrôle qui met en oeuvre le procédé de gestion thermique d'un bâtiment selon l'une des revendications 1 à 11.

**14.** Système de gestion thermique d'un bâtiment selon la revendication précédente, **caractérisé en ce que** l'unité de contrôle comprend un premier module (10) d'estimation de la température extérieure sur une période future, un second module (20) d'estimation de l'énergie disponible dans le générateur pour la période considérée, un troisième module (30) d'apprentissage des caractéristiques thermiques du bâtiment pour modéliser son comportement thermique, un quatrième module (40) de détermination de l'énergie nécessaire pour le bâtiment et un cinquième module (50) de pilotage thermique du générateur.

**15.** Bâtiment **caractérisé en ce qu'**il comprend un système de gestion thermique mettant en oeuvre le procédé de gestion thermique selon l'une des revendications 1 à 11.

**Patentansprüche**

**1.** Verfahren zum Wärmemanagement eines Gebäudes ausgehend von einer Heizvorrichtung, die mit einem Energieerzeuger geringer Leistung ausgestattet ist, **dadurch gekennzeichnet, dass** es einen Schritt (E3) der frühzeitigen Inbetriebnahme des Energieerzeugers in Abwesenheit eines Bewohners in dem Gebäude, um einen Sollwert des zukünftigen Komforts zu einem zukünftigen Zeitpunkt (H) einzuhalten, aufweist, unter Berücksichtigung der verfügbaren Energie ($E_{Erzeuger\_H}$) am Energieerzeuger bis zu diesem zukünftigen Zeitpunkt (H) und der erforderlichen Energie ($E_{Heizung\_H}$), um den Sollwert des zukünftigen Komforts innerhalb des Gebäudes zu diesem zukünftigen Zeitpunkt (H) zu erreichen.

2.  Verfahren zum Wärmemanagement eines Gebäudes nach dem vorhergehenden Anspruch, **dadurch gekennzeichnet, dass** der Sollwert des zukünftigen Komforts ein Temperatursollwert ist, und dadurch, dass es die folgenden Schritte aufweist:

    (E1) - Berechnung der verfügbaren Energie ($E_{Erzeuger\_H}$) am Energieerzeuger bis zu dem zukünftigen Zeitpunkt (H);
    (E2) - Berechnung der erforderlichen Energie ($E_{Heizung\_H}$), um die Solltemperatur innerhalb des Gebäudes zu diesem Zeitpunkt (H) zu erreichen;
    (E3') - Vergleich der beiden vorhergehenden Werte und Inbetriebnahme des Energieerzeugers, falls $E_{Heizung\_H}$ < $E_{Heizung\_H}$ ist.

3.  Verfahren zum Wärmemanagement eines Gebäudes nach einem der vorhergehenden Ansprüche, **dadurch gekennzeichnet, dass** der Sollwert des zukünftigen Komforts eine maximale Dauer (tmax) ist, die zulässig ist, um eine Komforttemperatur, falls erforderlich, zu dem zukünftigen Zeitpunkt (H) zu erreichen.

4.  Verfahren zum Wärmemanagement eines Gebäudes nach dem vorhergehenden Anspruch, **dadurch gekennzeichnet, dass** es die folgenden Schritte aufweist:

    (E1) - Berechnung der verfügbaren Energie ($E_{Erzeuger\_H}$) am Energieerzeuger bis zu dem zukünftigen Zeitpunkt (H);
    (E2) - Berechnung der erforderlichen Energie ($E_{Heizung\_H}$), um die Solltemperatur innerhalb des Gebäudes zu diesem Zeitpunkt (H) zu erreichen;
    (E3") - Vergleich der beiden vorhergehenden Werte und Inbetriebnahme des Energieerzeugers, falls H > tmax ist.

5.  Verfahren zum Wärmemanagement eines Gebäudes nach dem vorhergehenden Anspruch, **dadurch gekennzeichnet, dass** es einen Schritt der Berechnung einer niedrigen Solltemperatur, um den Betrieb des Energieerzeugers in Abwesenheit eines Bewohners in dem Gebäude zu regeln, aufweist, wobei dieser niedrige Sollwert über die Zeit variabel ist.

6.  Verfahren zum Wärmemanagement eines Gebäudes nach einem der vorhergehenden Ansprüche, **dadurch gekennzeichnet, dass** es einen Schritt der Erfassung wenigstens einer der folgenden Angaben aufweist:

    - Erfassung wenigstens eines Temperatursollwertes im Falle der Anwesenheit von Bewohnern des Gebäudes und/oder im Falle der Nichtanwesenheit; und/oder
    - Erfassung der Zeiträume der Anwesenheit und/oder Nichtanwesenheit von Bewohnern des Gebäudes; und/oder
    - Erfassung einer zulässigen maximalen Dauer (tmax) des Betriebs des Energieerzeugers, um eine bestimmte Komforttemperatur in dem Gebäude zu erreichen.

7.  Verfahren zum Wärmemanagement eines Gebäudes nach einem der vorhergehenden Ansprüche, **dadurch gekennzeichnet, dass** es einen Schritt der Schätzung der zukünftigen Außentemperatur zu mehreren Zeitpunkten (H) eines zukünftigen Zeitraums (P) aufweist.

8.  Verfahren zum Wärmemanagement eines Gebäudes nach einem der vorhergehenden Ansprüche, **dadurch gekennzeichnet, dass** es einen Schritt des Selbstlernens der thermischen Eigenschaften des Gebäudes aufweist.

9.  Verfahren zum Wärmemanagement eines Gebäudes nach einem der vorhergehenden Ansprüche, **dadurch gekennzeichnet, dass** es die Berechnung der verfügbaren Energie ($E_{Erzeuger\_H}$) am Energieerzeuger bis zu dem zukünftigen Zeitpunkt (H) mittels der folgenden Gleichung beinhaltet:

$$E_{Erzeuger\_H} = \sum_{1}^{H} P_{nenn},$$

wobei $P_{nenn}$ die Nennleistung des Energieerzeugers ist,
oder mittels der folgenden Gleichung:

$$E_{Erzeuger\_H} = \sum_{1}^{H} (a \times T_{e\_Verd} + b \times T_{e\_Verd}^{2} + c \times T_{e\_Kond} + d),$$

mit:

a, b, c, d: charakteristische Parameter einer Wärmepumpe;
$T_{e\_Verd}$ : Eingangstemperatur am Verdampfer der Wärmepumpe,
$T_{e\_Kond}$ : Eingangstemperatur am Kondensator der Wärmepumpe.

10. Verfahren zum Wärmemanagement eines Gebäudes nach einem der vorhergehenden Ansprüche, **dadurch gekennzeichnet, dass** es die Berechnung der erforderlichen Energie ($E_{Heizung\_H}$), um eine Soll-Innentemperatur des Gebäudes zum Zeitpunkt (H) zu erreichen, mittels der folgenden Gleichung beinhaltet:

$$E_{Heizung\_H} = (CAP_{ct} + CAP_{lt}) \times (T_{int\_cons\_H} - T_{int}) + GV \times \sum_{1}^{H} [(T_{int} + (T_{int\_cons\_H} - T_{int})/2) - T_{ext\_H}],$$

mit:

$T_{int}$: Innentemperatur zum gegenwärtigen Zeitpunkt;
$T_{int\_cons\_H}$ : Sollinnentemperatur zum Zeitpunkt H;
$T_{ext\_H}$ : geschätzte Außentemperatur zum Zeitpunkt H;
$CAP_{ct}$ : Kurzzeit-Wärmekapazität des Gebäudes;
$CAP_{lt}$ : Langzeit-Wärmekapazität des Gebäudes;
GV: Wärmeverlustkoeffizient des Gebäudes.

11. Verfahren zum Wärmemanagement eines Gebäudes nach einem der vorhergehenden Ansprüche, **dadurch gekennzeichnet, dass** es die Wiederholung, für mehrere Zeitpunkte (H) eines zukünftigen Zeitraums (P), eines Schrittes der Schätzung der Notwendigkeit einer frühzeitigen Inbetriebnahme des Energieerzeugers in Abwesenheit eines Bewohners in dem Gebäude, um einen Sollwert des zukünftigen Komforts zu einem zukünftigen Zeitpunkt (H) einzuhalten, aufweist, unter Berücksichtigung der verfügbaren Energie ($E_{Erzeuger\_H}$) am Energieerzeuger bis zu diesem zukünftigen Zeitpunkt (H) und der erforderlichen Energie ($E_{Heizung\_H}$), um den Sollwert des zukünftigen Komforts innerhalb des Gebäudes zu diesem zukünftigen Zeitpunkt (H) zu erreichen.

12. Datenträger, welcher ein Softwareprogramm aufweist, das die Schritte des Verfahrens zum Wärmemanagement eines Gebäudes nach einem der vorhergehenden Ansprüche durchführt.

13. System zum Wärmemanagement eines Gebäudes, welches einen Energieerzeuger geringer Leistung aufweist, **dadurch gekennzeichnet, dass** es eine Steuereinheit aufweist, welche das Verfahren zum Wärmemanagement eines Gebäudes nach einem der Ansprüche 1 bis 11 durchführt.

14. System zum Wärmemanagement eines Gebäudes nach dem vorhergehenden Anspruch, **dadurch gekennzeichnet, dass** die Steuereinheit ein erstes Modul (10) zur Schätzung der Außentemperatur in einem zukünftigen Zeitraum, ein zweites Modul (20) zur Schätzung der verfügbaren Energie im Energieerzeuger für den betrachteten Zeitraum, ein drittes Modul (30) zum Lernen der thermischen Eigenschaften des Gebäudes, um dessen thermisches Verhalten zu modellieren, ein viertes Modul (40) zur Bestimmung der erforderlichen Energie für das Gebäude und ein fünftes Modul (50) zur thermischen Vorsteuerung des Energieerzeugers aufweist.

**15.** Gebäude, **dadurch gekennzeichnet, dass** es ein System zum Wärmemanagement aufweist, welches das Verfahren zum Wärmemanagement nach einem der Ansprüche 1 bis 11 durchführt.

**Claims**

**1.** Method of thermal management of a building, on the basis of a thermal system equipped with a low-power generator, **characterized in that** it comprises a step (E3) of turning on the generator ahead of time in the absence of any occupant in the building so as to comply with a future comfort setpoint at a future instant (H), by taking account of the energy available ($E_{generator\_H}$) at the generator up until this future instant (H) and of the energy necessary ($E_{heating\_H}$) to reach the future comfort setpoint within the building at this future instant (H).

**2.** Method of thermal management of a building according to the preceding claim, **characterized in that** the future comfort setpoint is a temperature setpoint and **in that** it comprises the following steps:

(E1) - Calculation of the energy available ($E_{generator\_H}$) at the generator up until the future instant (H);
(E2) - Calculation of the energy necessary ($E_{heating\_H}$) to reach the setpoint temperature within the building at this instant (H);
(E3') - Comparison of the above two values and turning on of the generator if $E_{generator\_H} < E_{heating\_H}$.

**3.** Method of thermal management of a building according to one of the preceding claims, **characterized in that** the future comfort setpoint is a maximum duration (tmax) permitted so as to reach a comfort temperature in case of necessity at the future instant (H).

**4.** Method of thermal management of a building according to the preceding claim, **characterized in that** it comprises the following steps:

(E1) - Calculation of the energy available ($E_{generator\_H}$) at the generator up until the future instant (H);
(E2) - Calculation of the energy necessary ($E_{heating\_H}$) to reach the setpoint temperature within the building at this instant (H);
(E3") - Comparison of the above two values and turning on of the generator if H > tmax.

**5.** Method of thermal management of a building according to the preceding claim, **characterized in that** it comprises a step of calculating a low setpoint temperature to regulate the operation of the generator in the absence of any occupant in the building, this low setpoint being variable over time.

**6.** Method of thermal management of a building according to one of the preceding claims, **characterized in that** it comprises a step of inputting at least one of the following data:

- Inputting of at least one temperature setpoint in the case of occupancy of the building and/or in the case of non-occupancy; and/or
- Inputting of the periods of occupancy and/or of non-occupancy of the building; and/or
- Inputting of a permitted maximum duration (tmax) of operation of the generator so as to reach a certain comfort temperature in the building.

**7.** Method of thermal management of a building according to one of the preceding claims, **characterized in that** it comprises a step of evaluating the future exterior temperature over several instants (H) of a future period (P).

**8.** Method of thermal management of a building according to one of the preceding claims, **characterized in that** it comprises a step of auto-learning of the thermal characteristics of the building.

**9.** Method of thermal management of a building according to one of the preceding claims, **characterized in that** it comprises the calculation of the energy available ($E_{generator\_H}$) at the generator up until the future instant (H) through the following equation:

$$E_{generator\_H} = \sum_{1}^{H} P_{nominal}$$

where $P_{nominal}$ is the nominal power of the generator,
or through the following equation:

$$E_{generator\_H} = \sum_{1}^{H} (a \times T_{e\_evap} + b \times T_{e\_evap}^2 + c \times T_{e\_cond} + d)$$

With:

a, b, c, d: characteristic parameters of a heat pump;
$T_{e\_evap}$: input temperature at the evaporator of the heat pump;
$T_{e\_cond}$: input temperature at the condenser of the heat pump.

10. Method of thermal management of a building according to one of the preceding claims, **characterized in that** it comprises the calculation of the energy necessary ($E_{heating\_H}$) to reach an interior setpoint temperature of the building at the instant (H) through the following equation:

$$E_{heating\_H} = (CAP_{st} + CAP_{lt}) \times (T_{int\_setp\_H} - T_{int}) + GV \times \sum_{1}^{H} [(T_{int} + (T_{int\_setp\_H} - T_{int})/2) - T_{ext\_H}]$$

With:

$T_{int}$: interior temperature at the present instant;
$T_{int\_setp\_H}$: interior setpoint temperature at the instant H;
$T_{ext\_H}$: estimated exterior temperature at the instant H;
$CAP_{st}$: short-term heat capacity of the building;
$CAP_{lt}$: long-term heat capacity of the building;
GV: heat waste coefficient for the building.

11. Method of thermal management of a building according to one of the preceding claims, **characterized in that** it comprises the repetition for several instants (H) of a future period (P) of a step of estimating the need to turn on the generator ahead of time in the absence of any occupant in the building so as to comply with a future comfort setpoint at a future instant (H), by taking account of the energy available ($E_{generator\_H}$) at the generator up until this future instant (H) and of the energy necessary ($E_{heating\_H}$) to reach the future comfort setpoint within the building at this future instant (H).

12. Computer medium comprising a computer program implementing the steps of the method of thermal management of a building according to one of the preceding claims.

13. System for thermal management of a building comprising a low-power generator, **characterized in that** it comprises a control unit which implements the method of thermal management of a building according to one of Claims 1 to 11.

14. System for thermal management of a building according to the preceding claim, **characterized in that** the control unit comprises a first module (10) for estimating the exterior temperature over a future period, a second module (20) for estimating the energy available in the generator for the period considered, a third module (30) for learning the thermal characteristics of the building so as to model its thermal behaviour, a fourth module (40) for determining the energy necessary for the building and a fifth module (50) for thermal driving of the generator.

15. Building **characterized in that** it comprises a thermal management system implementing the thermal management method according to one of Claims 1 to 11.

Fig. 1

Fig. 2

## Fig. 3

T2

T1

22

21

27

t1

t

## Fig. 4

T2

T1

24

25

23

27

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2569257

- EP 2146309 A